# EUROPÄISCHE PATENTSCHRIFT

(11) **EP 2 238 000 B1**
(45) Veröffentlichungstag und Bekanntmachung des Hinweises auf die Patenterteilung: **12.06.2013**
(21) Anmeldenummer: 09704433.3
(22) Anmeldetag: 15.01.2009
(51) Int. Cl.: B60T 1/06, B60T 13/66, F16H 63/34

(54) **FAHRZEUGFESTSTELLBREMSE UND VERFAHREN ZUM BETREIBEN EINER FAHRZEUGFESTSTELLBREMSE**
VEHICLE PARKING BRAKE AND METHOD FOR OPERATING A VEHICLE PARKING BRAKE
FREIN DE STATIONNEMENT ET PROCÉDÉ D'ACTIONNEMENT D'UN FREIN DE STATIONNEMENT

(30) Priorität: 25.01.2008 DE 102008006264
(43) Veröffentlichungstag der Anmeldung: 13.10.2010
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2009/000197
(87) Internationale Veröffentlichungsnummer: WO 2009/092540

(56) Entgegenhaltungen:
- DE-A1- 3 732 761
- DE-A1- 10 037 565
- DE-A1- 19 834 156
- DE-A1-102004 055 960
- US-A1- 2004 026 139
- US-A1- 2004 244 523
- US-A1- 2004 248 687

## Beschreibung

Die Erfindung betrifft eine Feststellbremse für ein Fahrzeug, die in ein Getriebe des Fahrzeugs integriert ist.

Die Erfindung betrifft weiterhin ein Verfahren zum Betreiben einer in ein Getriebe eines Fahrzeugs integrierten Feststellbremse.

Zur Sicherung gegen ein unbeabsichtigtes Wegrollen eines abgestellten Fahrzeugs verfügen Fahrzeuge unterschiedlichster Bauart, die auf der Straße beziehungsweise der Schiene einsetzbar sind, üblicherweise über eine Feststellbremse. Diese ist in geeigneter Weise dazu ausgelegt, zumindest einen Teil der Fahrzeugräder, die während des Fahrbetriebs des Fahrzeugs eine Rollbewegung erlauben, zu blockieren.

Nachteilig bei derartigen Konstruktionen ist, dass an jedem zu bremsenden Fahrzeugrad eine Bremswirkung ausübende Vorrichtung vorzusehen ist, beispielsweise ein Federspeicherbremszylinder, so dass der bauliche Aufwand für die Feststellbremse sehr groß ist. Wird die Bremswirkung ausübende Vorrichtung an dem Fahrzeugrad gleichzeitig auch von einer Betriebsbremse des Fahrzeugs verwendet, wie im Falle eines Federspeicherbremszylinders, so ist zusätzlich ein Schutz vor einer Doppelbelastung vorzusehen, die bei gleichzeitiger Betätigung der Feststellbremse und der Betriebsbremse auftreten kann.

Im Zusammenhang mit der DE 10 2004 055 960 oder der US 2004/0248687 A1 ist bereits bekannt, die Feststellbremse in ein Getriebe des Fahrzeugs zu integrieren, wobei eine Lamellenbremse angewendet wird, die auch als Dauerbremse eingesetzt werden kann.

Der Erfindung liegt die Aufgabe zugrunde, eine einfach bauende Feststellbremse mit erweiterter Sicherheitsfunktionalität bereitzustellen.

Diese Aufgabe wird mit den Merkmalen der unabhängigen Ansprüche gelöst.

Vorteilhafte Ausführungsformen ergeben sich aus den abhängigen Ansprüchen.

Die Erfindung baut auf der gattungsgemäßen Feststellbremse dadurch auf, dass ein Feststellbremssteller zum Öffnen und Schließen der Feststellbremse vorgesehen ist, der über ein federndes Element vorgespannt ist, und dass ein bistabiles Stellglied vorgesehen ist, welches den Feststellbremssteller zum Öffnen und Schließen der Feststellbremse ansteuert. Durch das bistabile Stellglied wird ein Verharren des Feststellbremsstellers in dem aktuellen Zustand erreicht, falls ein Defekt in den das bistabile Stellglied ansteuernden Komponenten vorliegt. Ein plötzliches Öffnen oder Schließen der Feststellbremse durch ein monostabiles Stellglied als Folge eines derartigen Defekts kann dadurch verhindert werden. Die zum Schießen der Feststellbremse notwendige Energie kann in dem federnden Element, beispielsweise einer Feder oder einem Gummielement, gespeichert sein, so dass nur zum Öffnen der Feststellbremse Energie in Form von Druckmedium zugeführt werden muss.

Weiterhin kann dabei vorgesehen sein, dass ein der Feststellbremse zugeordnetes Steuergerät geeignet ist, zumindest ein Differential des Fahrzeugs zu sperren. Durch das Sperren zumindest eines Differentials des Fahrzeugs wird die Drehbewegung von zumindest zwei Fahrzeugrädern synchronisiert und somit eine Bremswirkung auf die gekoppelten Fahrzeugräder gleichmäßig verteilt. Durch das Sperren eines Querdifferentials lassen sich die Fahrzeugräder einer einzelnen Achse miteinander Koppeln während die Sperrung eines Längsdifferentials die Drehbewegung verschiedener Achsen starr miteinander koppelt. Das Sperren von zumindest einem Differential im Zusammenhang mit dem Schließen der Feststellbremse des Fahrzeugs verteilt daher die von einer einzigen Vorrichtung aufgebrachte Bremswirkung gleichmäßig auf die über die gesperrten Differentiale gekoppelten Fahrzeugräder.

Nützlicherweise ist vorgesehen, dass das bistabile Stellglied pulsweitenmoduliert ansteuerbar ist. Eine pulsweitenmodulierte Ansteuerbarkeit des bistabilen Stellgliedes erlaubt eine stufbare Anpassung der Bremswirkung der Feststellbremse.

Vorteilhafterweise ist dabei vorgesehen, dass das der Feststellbremse zugeordnete Steuergerät geeignet ist, ein Getriebe des Fahrzeugs zu steuern. Durch die Integration der Feststellbremse in das Getriebe des Fahrzeugs ergibt sich eine räumliche Nähe zwischen den Komponenten der Feststellbremse und dem Getriebe, die zur Einsparung eines Steuergerätes, beispielsweise eines Getriebesteuergerätes, genutzt werden kann.

Dabei kann vorgesehen sein, dass das der Feststellbremse zugeordnete Steuergerät geeignet ist, eine Kupplung des Fahrzeugs zu steuern. Die Kupplung des Fahrzeugs ist üblicherweise zwischen einem Antriebsmotor und dem Getriebe des Fahrzeugs, direkt vor dem Getriebe angeordnet. Diese räumliche Nähe kann, zumal das Betätigen der Kupplung oftmals mit einem Betätigen des Getriebes korreliert, idealerweise zur Einsparung eines weiteren Steuergerätes, zum Beispiel einem die Kupplung steuernden Steuergerät, ausgenutzt werden.

Weiterhin kann vorgesehen sein, dass der Feststellbremssteller einer Getriebeeingangsstufe nachgeordnet ist. Die auf die Fahrzeugräder übertragbare Bremswirkung ist von der Anordnung des Feststellbremsstellers innerhalb des Getriebes abhängig, da mit jeder Getriebestufe die bei einer Drehung der Fahrzeugräder auftretenden Drehmomente gewandelt werden. Die Anordnung des Feststellbremsstellers nach einer Getriebeeingangsstufe ist daher in Abhängigkeit von dem von den Fahrzeugrädern auf den Feststellbremssteller übertragenen Drehmoment sinnvoll.

Es kann auch nützlich sein, dass der Feststellbremssteller einer Getriebeausgangsstufe vorgeordnet ist. Auch bei dieser Anordnung kann sich die in der Getriebeausgangsstufe stattfindende Drehmomentwandlung vorteilhaft auf die Bremswirkung der Feststellbremse auswirken.

Nützlicherweise kann weiterhin vorgesehen sein, dass das der Feststellbremse zugeordnete Steuergerät geeignet ist, die Feststellbremse zu schließen, wenn eine Zündung des Fahrzeugs ausgeschaltet wird. Das Ausschalten der Zündung des Fahrzeugs ist üblicherweise eine der letzten Handlungen die der Fahrer beim Abstellen des Fahrzeugs vor dem Verlassen seiner Fahrerposition ausführt. Durch das automatische Schließen der Feststellbremse beim Ausschalten der Zündung wird daher sichergestellt, das ein unbeabsichtigtes Vergessen, die Feststellbremse einzulegen, keine negative Auswirkung in Form eines ungesicherten Fahrzeugs nach sich zieht.

Das gattungsgemäße Verfahren wird dadurch weiterentwickelt, dass ein Feststellbremssteller über ein federndes Element vorgespannt wird und dass der Feststellbremssteller durch das Ansteuern eines bistabilen Stellgliedes betätigt wird, der die Feststellbremse öffnet oder schließt.

Auf diese Weise werden die Vorteile und Besonderheiten der erfindungsgemäßen Feststellbremse auch im Rahmen eines Verfahrens umgesetzt.

Dies gilt auch für die nachfolgend angegebenen besonders bevorzugten Ausführungsformen des erfindungsgemäßen Verfahrens.

Dieses wird nützlicherweise dadurch weitergebildet, dass beim Betätigen der Feststellbremse zumindest ein Differential des Fahrzeugs gesperrt wird. Nützlicherweise ist vorgesehen, dass das bistabile Stellglied pulsweitenmoduliert angesteuert wird.

Vorteilhafterweise ist vorgesehen, dass das der Feststellbremse zugeordnete Steuergerät ein Getriebe des Fahrzeugs steuert.

Es kann auch vorgesehen sein, dass das der Feststellbremse zugeordnete Steuergerät eine Kupplung des Fahrzeugs steuert.

Weiterhin kann vorgesehen sein, dass die Feststellbremse nach dem Ausschalten einer Zündung des Fahrzeugs geschlossen wird.

Insbesondere kann vorgesehen sein, dass die Demontage der Feststellbremse bei einer Demontage des Getriebes als erster Schritt erfolgt und dass die Montage der Feststellbremse bei einer Montage des Getriebes als letzter Schritt erfolgt. Durch diese Montage-/Demontagereihenfolge wird ein modularer Austausch der Feststellbremse ohne eine aufwendige Demontage des Getriebes ermöglicht, wodurch der Wartungsaufwand reduziert werden kann, falls die Feststellbremse verschlissen ist und ersetzt werden muss.

Die Erfindung wird nun mit Bezug auf die begleitenden Zeichnungen anhand bevorzugter Ausführungsformen beispielhaft erläutert.

Es zeigen:
- Figur 1: eine schematische Darstellung eines Fahrzeugs mit einer erfindungsgemäßen Feststellbremse;
- Figur 2: eine vergrößerte Darstellung einer erfindungsgemäßen Feststellbremse und
- Figur 3: das zeitliche Zusammenspiel verschiedener Parameter beim Betrieb der Feststellbremse.

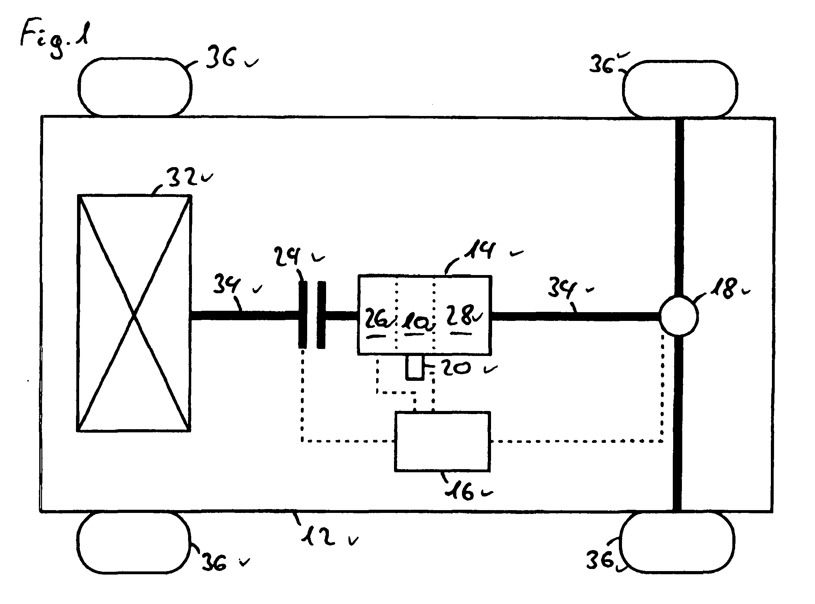

Figur 1 zeigt eine schematische Darstellung eines Fahrzeugs mit einer erfindungsgemäßen Feststellbremse. Ein dargestelltes Fahrzeug 12 mit Fahrzeugrädern 36 wird von einem Antriebsmotor 32 über einen Triebstrang 34 angetrieben, wobei die von dem Antriebsmotor 32 aufgebrachte Kraft über ein Differential 18 auf die hinteren Fahrzeugräder 36 des Fahrzeugs 12 übertragen wird. In dem Triebstrang 34 sind weiterhin eine Kupplung 24 und ein Getriebe 14 angeordnet, wobei das Getriebe 14 eine Getriebeeingangsstufe 26, eine Getriebeausgangsstufe 28 und eine zwischen der Getriebeeingangsstufe 26 und der Getriebeausgangsstufe 28 angeordnete Feststellbremse 10 umfasst. Ein Steuergerät 16 ist über Leitungen mit der Kupplung 24, dem Differential 18 und dem Getriebe 14 gekoppelt, wobei eine separate Kopplung des Steuergeräts 16 über ein bistabiles Stellglied 20 mit der Feststellbremse 10 vorgesehen ist. Ein bistabiles Stellglied 20 ist ein Stellglied, das bei Verlust des Vorsteuersignals, das pneumatisch, elektrisch oder hydraulisch sein kann, seine momentane Schaltposition beibehält. Es kann beispielsweise mithilfe von Drehrasten, Schieberasten oder Reibungselementen wie O-Ringen, die gleichzeitig eine Dichtfunktion wahrnehmen, aufgebaut sein. Eine magnetische Selbsthaltung zur Lagefixierung und selbsthaltende Spindeln sind ebenfalls denkbar. Das Steuergerät 16 kann die Kupplung 24 öffnen und schließen, das Differential 18 sperren und entsperren, das Getriebe 14 schalten und die Feststellbremse 10 öffnen und schließen. Die Feststellbremse 10 kann daher, wenn sie von dem Steuergerät 16 geschlossen wird und das Steuergerät 16 gleichzeitig das Differential 18 sperrt, die beiden hinteren Fahrzeugräder 36 gleichmäßig bremsen.

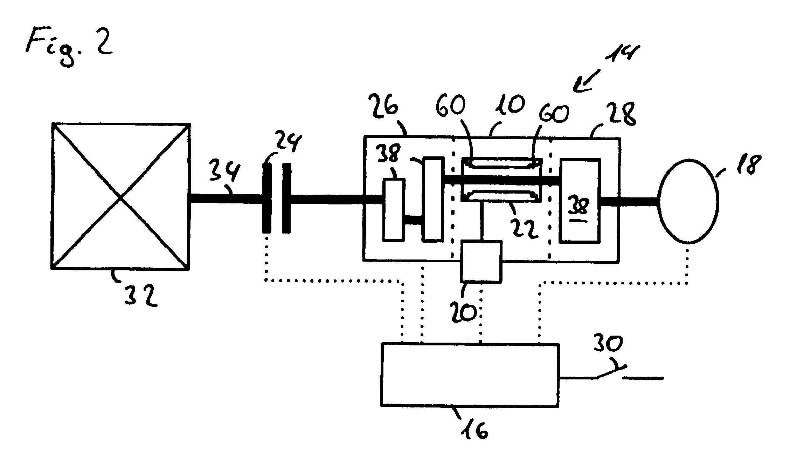

Figur 2 zeigt eine vergrößerte Darstellung einer erfindungsgemäßen Feststellbremse. Insbesondere das Getriebe 14 ist detaillierter ausgeführt. Die Getriebeeingangsstufe 26 umfasst zwei Getriebeübersetzungen 38, die wahlweise beide oder einzeln von einem nicht dargestellten Getriebesteller durch das Steuergerät 16 schaltbar sind. Auch die Getriebeausgangsstufe 28 umfasst eine Getriebeübersetzung 38. Die Getriebeübersetzungen 38 können beispielsweise als Zahnradpaare und/oder Sonnen- und Planetenräder ausgeführt sein. Zwischen der Getriebeeingangsstufe 26 und der Getriebeausgangsstufe 28 ist wieder die Feststellbremse 10 in das Getriebe 14 integriert, wobei der eine Welle umfassende Feststellbremssteller 22 eingezeichnet ist, der von einem federnden Element 60 vorgespannt ist. Der Feststellbremssteller 22 wird von dem bistabilen Stellglied 20 über das Steuergerät 16 angesteuert und ist über das federnde Element 60, zum Beispiel eine Feder rückgestellt. Der Feststellbremssteller kann von dem bistabilen Stellglied 20 elektrisch, das heißt über einen Elektromotor, oder über einen pneumatischen beziehungsweise hydraulischen Zylinder betätigt werden. Die Medienversorgung des bistabilen Stellgliedes 20 beziehungsweise des Feststellbremsstellers 22 kann dabei insbesondere redundant durch zwei separate nicht dargestellte Medienversorgungsleitungen realisiert werden, wobei vorteilhaftervveise die Medienversorgung des Getriebes 14 und der Feststellbremse 10 über eine gemeinsame Medienversorgung realisiert sind. Das sich relativ zu dem Gehäuse des Getriebes 14 drehende Element wird dann durch Reibung mit einem von den Feststellbremssteller 22 bewegten Bremsbelag abgebremst, wobei die entstehenden Kräfte über das feststehende Gehäuse des Getriebes 14 aufgenommen werden. Der Feststellbremssteller 22 ist in der Lage, aufgrund des bistabilen Stellgliedes 20, die momentane Stellung beizubehalten, wenn eine Zündung 30 abgeschaltet wird oder der Strom ausfällt, da die Medienversorgung nicht plötzlich unterbrochen wird. Das abzubremsende sich bewegende Element ist vorzugsweise eine Scheibe oder ein Rad welches drehfest mit der Antriebswelle verbunden ist. Dabei ist es nicht notwendig, dass der Feststellbremssteller 22 die Welle umschließt. Der Feststellbremssteller 22 muss lediglich so positioniert sein, dass er einen Bremsbelag gegen ein zu bremsendes Teil pressen kann. Der Feststellbremssteller 22 ist außerdem so gestaltet, dass er bei einer Hilfsbremsunterstützung automatisch bei einer Entlüftung der Betriebsbremse öffnet. Bei einer hydraulischen oder pneumatischen Feststellbremsanlage wird dies dadurch erreicht, dass es einen Aktuator, zum Beispiel einen Zylinder, gibt, welcher durch ein weiteres federndes Element, zum Beispiel eine Feder, rückgestellt wird. Weiterhin ist jedoch zumindest ein zugehöriges Vorsteuerventil bistabil aufgebaut.

Dieser Zylinderfedereffekt wird bei einem Elektromotor durch ein zusätzliches elastisches zuspannendes Element, zum Beispiel eine Feder oder einen Gummiblock erreicht, welcher in serieller Wirkrichtung zur Motorachse angeordnet ist. Das Steuergerät 16 hat einen Anschluss an einen Fahrzeugbus, über den es mit weiteren Steuergeräten Informationen bezüglich des Fahrzeugzustandes austauschen kann, zum Beispiel einem EBS-Steuergerät und einer Motorsteuerung. Weiterhin umfasst das Steuergerät 16 einen Wake-Up-Schaltkreis und einen Schreib-LeseSpeicher zum Speichern von Statusinformationen, die beispielsweise im Rahmen einer späteren Fahrzeugdiagnose verwendet werden können. Das bistabile Stellglied 20 ermöglicht bei einer ECPB-Regelung im Falle einer Hilfsbremsunterstützung ein Abbremsen des Durchdrehenden Fahrzeugrades und damit eine Stabilisierung des Fahrzeugs durch Einschränkung des Differentialausgleichvermögens. Dies ähnelt einer ASR-Funktionalität. Ein nicht dargestelltes TCM-Modul übernimmt eine Testfunktion und die Zugabstimmung bei Teilbremsungen im Falle der Betriebsbremsunterstützung bei einem EBS-Teilausfall, falls das Fahrzeug ein Fahrzeugzug, das heißt ein Zugfahrzeug mit einem Anhänger, ist.

Eine Handsteuereinheit erfasst einen ein Öffnen beziehungsweise Schließen der Feststellbremse betreffenden Fahrerwunsch. Die Handsteuereinheit besteht aus einem bewegbaren Element, zum Beispiel einem Hebel, einer Wippe oder einem Knopf, und einem feststehendem Element. Die Relativbewegungen dieser Teile zueinander können gemessen werden. Durch eine Erfassung von Zwischenpositionen ist dabei eine gewünschte stufbare Bremswirkung detektierbar. Die Signalübertragung zu dem Steuergerät 16 kann digital oder analog erfolgen, wobei eine Redundanz vorzusehen ist, das heißt die Übermittlung eines einzelnen Fahrerwunsches über zwei voneinander getrennte Wege, zum Beispiel zwei separate Kabel. Die Handsteuereinheit ermöglicht ein Aufwecken des Steuergeräts 16 der Feststellbremse 10 entweder über einen Fahrzeugbus, zum Beispiel dem CAN-BUS, oder eine separate Leitung. Dadurch ist insbesondere bei einem abgestellten Fahrzeug ein Aufwecken des Steuergerätes 16 möglich und ermöglicht zumindest ein Schließen der Feststellbremse 10. Das Öffnen der Feststellbremse 10 kann jedoch ebenfalls vorgesehen sein.

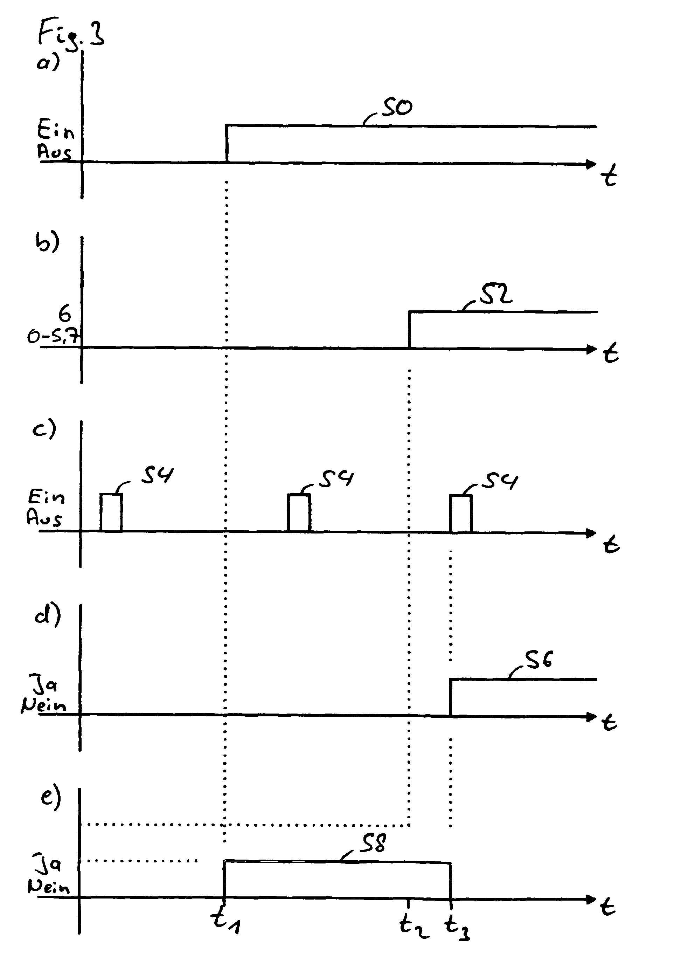

Figur 3 zeigt das zeitliche Zusammenspiel verschiedener Parameter beim Betrieb der Feststellbremse. Eine Kurve 50 in Figur 3a zeigt den Status der Zündung, die zu einem Zeitpunkt t₁ eingeschaltet wird. In Figur 3b ist in einer Kurve 52 der Druck aufgetragen, wobei zu einem Zeitpunkt t₂ nach t₁ der notwendigen Hilfsbremsdruck von 6 bar aufgebaut ist. In Figur 3c ist der zeitliche Verlauf des Aktivierungsstatus der Fahreranwesenheitskontrolle als eine Kurve 54 aufgetragen. Die Fahreranwesenheitskontrolle wird jeweils für einen kurzen Zeitraum aktiviert. Figur 3d stellt in einer Kurve 56 den Freigabestatus der Feststellbremse dar. Die Feststellbremse wird zu einem Zeitpunkt t₃ nach t₂ freigegeben. In Figur 3e wird in einer Kurve 58 der Status einer Warnmeldung angegeben, die eine gesperrte Feststellbremse signalisiert. Im Folgenden wird das Zusammenspiel der einzelnen Parameter erläutert.

Zunächst findet vor dem Zeitpunkt t₁ nur eine zeitweise Aktivierung der Fahreranwesenheitskontrolle statt. Bei t, wird die Zündung aktiviert und, da noch kein ausreichender Druck für eine Hilfsbremsung vorhanden ist, eine entsprechende Warnung ausgegeben, während gleichzeitig der Druckaufbau nach dem Starten des Antriebsmotors einsetzt. Zum Zeitpunkt t₂ ist ein ausreichender Druck für eine Hilfsbremsung vorhanden, jedoch die Fahreranwesenheit noch nicht gleichzeitig überprüft. Erst wenn dies zum Zeitpunkt t₃ ebenfalls positiv abgeschlossen wurde, erlischt die Warnmeldung und die Feststellbremse wird freigegeben.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Feststellbremse
- 12: Fahrzeug
- 14: Getriebe
- 16: Steuergerät
- 18: Differential
- 20: bistabiles Stellglied
- 22: Feststellbremssteller
- 24: Kupplung
- 26: Getriebeeingangsstufe
- 28: Getriebeausgangsstufe
- 30: Zündung
- 32: Antriebsmotor
- 34: Triebstrang
- 36: Fahrzeugrad
- 38: Getriebeübersetzung
- 50: Status Zündung
- 52: Druckkurve
- 54: Status Fahreranwesenheitskontrolle
- 56: Freigabe Feststellbremse
- 58: Warnung "Feststellbremse gesperrt"
- 60: federndes Element

## Patentansprüche

1. Feststellbremse (10) für ein Fahrzeug (12), die in ein Getriebe (14) des Fahrzeugs (12) integriert ist, **dadurch gekennzeichnet,**
- **dass** ein Feststellbremssteller (22) zum Öffnen und Schließen der Feststellbremse (10) vorgesehen ist, der über ein federndes Element (60) vorgespannt ist, und
- **dass** ein bistabiles Stellglied (20) vorgesehen ist, welches den Feststellbremssteller (22) zum Öffnen und Schließen der Feststellbremse (10) ansteuert.

2. Feststellbremse (10) nach Anspruch 1, **dadurch gekennzeichnet, dass** ein der Feststellbremse (10) zugeordnetes Steuergerät (16) geeignet ist, zumindest ein Differential (18) des Fahrzeugs (12) zu sperren.

3. Feststellbremse (10) nach Anspruch 2, **dadurch gekennzeichnet, dass** das bistabile Stellglied (20) pulsweitenmoduliert ansteuerbar ist.

4. Feststellbremse (10) nach einem der vorhergehenden Ansprüche, **dadurch gekennzeichnet, dass** das der Feststellbremse (10) zugeordnete Steuergerät (16) geeignet ist, ein Getriebe (14) des Fahrzeugs (12) zu steuern.

5. Feststellbremse (10) nach einem der vorhergehenden Ansprüche, **dadurch gekennzeichnet, dass** das der Feststellbremse (10) zugeordnete Steuergerät (16) geeignet ist, eine Kupplung (24) des Fahrzeugs (12) zu steuern.

6. Feststellbremse (10) nach einem der vorhergehenden Ansprüche, **dadurch gekennzeichnet, dass** der Feststellbremssteller (22) einer Getriebeeingangsstufe (26) nachgeordnet ist.

7. Feststellbremse (10) nach einem der vorhergehenden Ansprüche, **dadurch gekennzeichnet, dass** der Feststellbremssteller (22) einer Getriebeausgangsstufe (28) vorgeordnet ist.

8. Feststellbremse (10) nach einem der vorhergehenden Ansprüche, **dadurch gekennzeichnet, dass** das der Feststellbremse (10) zugeordnete Steuergerät (16) geeignet ist, die Feststellbremse (10) zu schließen, wenn eine Zündung (30) des Fahrzeugs (12) ausgeschaltet wird.

9. Fahrzeug (12) mit einer Feststellbremse (10) nach einem der vorhergehenden Ansprüche.

10. Verfahren zum Betreiben einer in ein Getriebe (14) eines Fahrzeugs (12) integrierten Feststellbremse (10), **dadurch gekennzeichnet,**
- **dass** ein Feststellbremssteller (22) über ein federndes Element (60) vorgespannt wird und
- **dass** der Feststellbremssteller (22) durch das Ansteuern eines bistabilen Stellgliedes (20) betätigt wird, der die Feststellbremse (10) öffnet oder schließt.

11. Verfahren nach Anspruch 10, **dadurch gekennzeichnet, dass** beim Betätigen der Feststellbremse (10) zumindest ein Differential (18) des Fahrzeugs (12) gesperrt wird.

12. Verfahren nach Anspruch 10 oder 11, **dadurch gekennzeichnet, dass** das bistabile Stellglied (20) pulsweitenmoduliert angesteuert wird.

13. Verfahren nach einem der Ansprüche 10 bis 12, **dadurch gekennzeichnet, dass** das der Feststellbremse (10) zugeordnete Steuergerät (16) ein Getriebe (14) des Fahrzeugs (12) steuert.

14. Verfahren nach einem der Ansprüche 10 bis 13, **dadurch gekennzeichnet, dass** das der Feststellbremse (10) zugeordnete Steuergerät (16) eine Kupplung (24) des Fahrzeugs (12) steuert.

15. Verfahren nach einem der Ansprüche 10 bis 14, **dadurch gekennzeichnet, dass** die Feststellbremse (10) nach dem Ausschalten einer Zündung (30) des Fahrzeugs (12) geschlossen wird.

16. Verfahren nach einem der Ansprüche 10 bis 15, **dadurch gekennzeichnet,**
- **dass** die Demontage der Feststellbremse (10) bei einer Demontage des Getriebes (14) als erster Schritt erfolgt und
- **dass** die Montage der Feststellbremse (10) bei einer Montage des Getriebes (14) als letzter Schritt erfolgt.

## Claims

1. A parking brake (10) for a vehicle (12), which parking brake (10) is integrated into a transmission (14) of the vehicle (12), **characterized**
- **in that** a parking brake actuator (22) is provided for opening and closing the parking brake (10), which parking brake actuator (22) is preloaded by means of a resilient element (60), and
- **in that** a bistable actuating element (20) is provided which activates the parking brake actuator (22) so as to open and close the parking brake (10).

2. The parking brake (10) as claimed in claim 1, **characterized in that** a control unit (16) which is assigned to the parking brake (10) is suitable for locking at least one differential (18) of the vehicle (12).

3. The parking brake (10) as claimed in claim 2, **characterized in that** the bistable actuating element (20) can be activated in pulse-width-modulated fashion.

4. The parking brake (10) as claimed in one of the preceding claims, **characterized in that** the control unit (16) which is assigned to the parking brake (10) is suitable for controlling a transmission (14) of the vehicle (12).

5. The parking brake (10) as claimed in one of the preceding claims, **characterized in that** the control unit (16) which is assigned to the parking brake (10) is suitable for controlling a clutch (24) of the vehicle. (12).

6. The parking brake (10) as claimed in one of the preceding claims, **characterized in that** the parking brake actuator (22) is connected downstream of a transmission input stage (26).

7. The parking brake (10) as claimed in one of the preceding claims, **characterized in that** the parking brake actuator (22) is connected upstream of a transmission output stage (28).

8. The parking brake (10) as claimed in one of the preceding claims, **characterized in that** the control unit (16) which is assigned to the parking brake (10) is suitable for closing the parking brake (10) when an ignition (30) of the vehicle (12) is switched off.

9. A vehicle (12) having a parking brake (10) as claimed in one of the preceding claims.

10. A method for operating a parking brake (10) which is integrated into a transmission (14) of a vehicle (12), **characterized**
- **in that** a parking brake actuator (22) is preloaded by means of a resilient element (60), and
- **in that** the parking brake actuator (22) is actuated by means of the activation of a bistable actuating element (20) which opens or closes the parking brake (10).

11. The method as claimed in claim 10, **characterized in that**, during the actuation of the parking brake (10), at least one differential (18) of the vehicle (12) is locked.

12. The method as claimed in claim 10 or 11, **characterized in that** the bistable actuating element (20) is activated in pulse-width-modulated fashion.

13. The method as claimed in one of claims 10 to 12, **characterized in that** the control unit (16) which is assigned to the parking brake (10) controls a transmission (14) of the vehicle (12).

14. The method as claimed in one of claims 10 to 13, **characterized in that** the control unit (16) which is assigned to the parking brake (10) controls a clutch (24) of the vehicle (12).

15. The method as claimed in one of claims 10 to 14, **characterized in that** the parking brake (10) is closed after an ignition (30) of the vehicle (12) is switched off.

16. The method as claimed in one of claims 10 to 15, **characterized**
- **in that** the dismounting of the parking brake (10) takes place as a first step during a dismounting of the transmission (14), and
- **in that** the mounting of the parking brake (10) takes place as the final step during a mounting of the transmission (14).

## Revendications

1. Frein (10) de stationnement pour un véhicule (12), qui est intégré dans une transmission (14) du véhicule (12), **caractérisé**
- **en ce qu'**il est prévu, pour l'ouverture et la fermeture du frein (10) de stationnement, un régleur (22) de frein de stationnement, qui est mis sous précontrainte par un élément (60) à ressort et
- **en ce qu'**il est prévu un organe (20) de réglage bistable, qui commande le régleur (22) de frein de stationnement pour l'ouverture et la fermeture du frein (10) de stationnement.

2. Frein (10) de stationnement suivant la revendication 1, **caractérisé en ce qu'**un appareil (16) de commande associé au frein (10) de stationnement est propre à bloquer au moins un différentiel (18) du véhicule (12).

3. Frein (10) de stationnement suivant la revendication 2, **caractérisé en ce que** l'organe (20) de réglage bistable peut être commandé d'une manière modulée en largeur d'impulsion.

4. Frein (10) de stationnement suivant l'une des revendications précédentes, **caractérisé en ce que** l'appareil (16) de commande associé au frein (10) de stationnement est propre à commander une transmission (14) du véhicule (12).

5. Frein (10) de stationnement suivant l'une des revendications précédentes, **caractérisé en ce que** l'appareil (16) de commande associé au frein (10) de stationnement est propre à commander un accouplement (24) du véhicule (12).

6. Frein (10) de stationnement suivant l'une des revendications précédentes, **caractérisé en ce que** le régleur (22) du frein de stationnement est monté en aval d'un étage (26) d'entrée de transmission.

7. Frein (10) de stationnement suivant l'une des revendications précédentes, **caractérisé en ce que** le régleur (22) de frein de stationnement est monté en amont d'un étage (28) de sortie de la transmission.

8. Frein (10) de stationnement suivant l'une des revendications précédentes, **caractérisé en ce que** l'appareil (16) de commande associé au frein (10) de stationnement est propre à fermer le frein (10) de stationnement, lorsqu'un allumage (30) du véhicule (12) est mis hors circuit.

9. Véhicule (12) ayant un frein (10) de stationnement suivant l'une des revendications précédentes.

10. Procédé pour faire fonctionner un frein (10) de stationnement intégré dans une transmission (14) d'un véhicule (12), **caractérisé**
- **en ce que** l'on met sous contrainte préalable un régleur (22) du frein de stationnement par un élément (60) à ressort et
- **en ce que** l'on actionne le régleur (22) de frein de stationnement par la commande d'un organe (20) de réglage bistable, qui ouvre ou ferme le frein (10) de stationnement.

11. Procédé suivant la revendication 10, **caractérisé en ce que** lors de l'actionnement du frein (10) de stationnement, on bloque au moins un différentiel (18) du véhicule (12).

12. Procédé suivant la revendication 10 ou 11, **caractérisé en ce que** l'on commande d'une manière modulée en largeur d'impulsion l'organe (20) de réglage bistable.

13. Procédé suivant l'une des revendications 10 à 12, **caractérisé en ce que** l'appareil (16) de commande associé au frein (10) de stationnement commande une transmission (14) du véhicule (12).

14. Procédé suivant l'une des revendications 10 à 13, **caractérisé en ce que** l'appareil (16) de commande associé au frein (10) de stationnement commande un accouplement (24) du véhicule (12).

15. Procédé suivant l'une des revendications 10 à 14, **caractérisé en ce que** l'on ferme le frein (10) de stationnement après la mise en circuit d'un allumage (30) du véhicule (12).

16. Procédé suivant l'une des revendications 10 à 15, **caractérisé**
- **en ce que** l'on effectue comme premier stade le démontage du frein (10) de stationnement lors d'un démontage de la transmission (14) et
- **en ce que** l'on effectue comme dernier stade le montage du frein (10) de stationnement lors d'un montage de la transmission (14).
